# EUROPEAN PATENT SPECIFICATION

(11) **EP 2 768 149 B1**
(45) Date of publication and mention of the grant of the patent: **26.12.2018**
(21) Application number: 14153652.4
(22) Date of filing: 03.02.2014
(51) Int. Cl.: H04B 1/08

(54) **On-vehicle electronic device**
Elektronische Vorrichtung an Bord eines Fahrzeugs
Dispositif électronique embarqué

(30) Priority: 14.02.2013 JP 2013026471
(43) Date of publication of application: 20.08.2014
(73) Proprietor: Alpine Electronics, Inc., Tokyo (JP)
(72) Inventor: Sano, Noriyuki, Iwaki, Fukushima 970-1192 (JP); Kajimoto, Tomomi, Iwaki, Fukushima 970-1192 (JP); Kurasawa, Shintaro, Iwaki, Fukushima 970-1192 (JP); Yokota, Rie, Iwaki, Fukushima 970-1192 (JP); Matsumoto, Nobuo, Iwaki, Fukushima 970-1192 (JP); Kimura, Atsushi, Iwaki, Fukushima 970-1192 (JP)
(74) Representative: Schmitt-Nilson Schraud Waibel Wohlfrom Patentanwälte Partnerschaft mbB

(56) References cited:
- DE-C1- 19 825 790
- JP-A- 2006 290 006
- JP-A- 2009 184 581
- US-A- 5 493 479
- US-A- 5 575 544

## Description

The present invention relates to an on-vehicle electronic device equipped with a detachable panel, which is disposed on the front side of a housing of the on-vehicle electronic device and provided with controls and a display unit. The present invention particularly relates to the on-vehicle electronic device equipped with the detachable panel reliably attached thereto and easily detached therefrom with components, the number of which is reduced as much as possible.

In some of on-vehicle electronic devices, a panel thereof equipped with controls and a display unit can be removed from a housing and carried to the outside of a vehicle so as to prevent the panel from being stolen from a cabin of an automobile.

In a panel detachment mechanism described in JP 2009-184581 A, a front bracket is provided on the front side of a main body portion, and an operation panel is detachably held by the front bracket. The posture of the front bracket is changeable so that the front bracket projects forward relative to the main body portion in an inclined posture.

The front bracket is provided with stopper units and a lock unit. The stopper units are each provided with a stopper having a pressure portion urged forward by a spring member. The lock unit is provided with a retaining member.

When the operation panel is attached to the front bracket, a retaining projection portion provided in a rear portion of the operation panel is held by the lock unit. Thus, the operation panel is attached to the front bracket and locked. In this state, the operation panel is constantly pressed forward by the stoppers of the stopper units. When the detach button provided on a lower end portion of the operation panel is pressed, locking by the lock unit is released, the operation panel is pressed forward by the stoppers, and the operation panel is temporarily supported and lightly locked by tip portions of the stoppers. In this state, the operation panel can be manually held and removed from the front bracket.

In a panel detachment mechanism described in JP 2006-290006 A, a lock lever is rotatably provided on the front side of a main body portion such that the lock lever can be moved forward and rearward. The lock lever is constantly urged in a projecting direction by a spring member.

When an operation panel is attached to the main body portion, the lock lever is held in a retracted state by a holding mechanism provided in the main body portion. In this state, a tip portion of the lock lever is engaged with the operation panel, thereby locking the operation panel in an attached state. When a release switch provided in a front surface of the operation panel is pressed, a tapered surface of the lock lever is pressed by a tip portion of the release switch, thereby rotating the lock lever to release the lock lever held by the holding mechanism. The lock lever released from the held state is caused to project to the front side of the main body by the spring member, and the operation panel is temporarily supported and lightly locked by the tip portion of the lock lever having projected. In this state, the operation panel can be removed from the front bracket.

In the panel detachment mechanism described in JP 2009-184581 A, the lock unit that locks the operation panel in an attached state and the stopper units that continue to press forward the operation panel in the attached state are separately provided in the front bracket. This increases the number of components disposed in the front bracket. Furthermore, one lock unit and two stopper units provided in the front bracket occupy a large area of the front bracket. Thus, arrangement of other components such as a connector is not easy in the design.

Since the operation panel in the attached state is constantly pressed forward by the stoppers, pressure is constantly applied to the rear portion of the operation unit. Thus, distortion of internal structures of the operation unit or the like easily occurs.

In the panel detachment mechanism described in JP 2006-290006 A, a movement space that allows the lock lever to be retracted and a holding mechanism that holds the lock lever are provided in the main body portion and occupy spaces in the main body portion. Thus, arrangement of other mechanisms in the main body portion is restricted.

Also in the panel detachment mechanism described in JP 2006-290006 A, the lock lever is engaged with the operation panel, and holding of the lock lever in the retracted state is released by a release switch provided in the operation panel. In this structure, when the lock lever is pushed by the release switch, holding of the lock lever in the retracted state is released while the tip portion of the release switch and the operation panel are not disengaged from each other. This requires very difficult setting of operational timing.

Even when the above-described timing is slightly deviated due to clearances or the like in the mechanism, problems such as dropping of the operation panel tend to occur due to the holding of the lock lever in the retracted state being not released or the lock lever being unable to temporarily support the operation panel at a time when the lock lever projects.

The detach button described in JP 2009-184581 A and the release switch described in JP 2006-290006 A are disposed in the respective operation panels. Thus, in either case, there is a possibility of the detach button or the release switch being unintentionally operated for releasing while the operation panel is attached. In this case, the operation panel is detached while being used.

US 5 493 479 A discloses an electronic equipment, such as a car audio equipment. The electronic equipment includes a console unit attached to an equipment body. The attaching mechanism includes an arm, a holder and first and second springs. The arm is attached so as to be rotated in the direction corresponding to the direction in which the console unit is attached to and detached from the equipment body. The holder is rotatably attached to a tip end portion of the arm in an opposing relation to the arm. The holder includes a first engagement portion and a second engagement portion. The first spring applies to the console unit a biasing force in the direction in which the console unit is pushed forward. A second spring is weaker in spring force than the first spring and applies to the holder a biasing force in the direction in which the console unit is pushed forward.

US 5 575 544 A discloses a vehicle-mounted electronic apparatus with an anti-theft device. The apparatus comprises an equipment body, a control panel, engaging means for disengagably engaging the control panel to the equipment body, locking means for unlockably locking the control panel to the equipment body in a mounted position, biasing means for continuously biasing the control panel away from the equipment body, and retaining means for holding the control panel in an ejected position.

DE 198 25 790 C1 discloses an automobile radio with control panel enclosed by flap, having hinge arrangement for flap which is retained by magnet. The road vehicle radio has a pivot mounted flap that is used to enclose the control panel. At the end of the flap is a profiled hook that engages a pivot mounted hook in the main housing. The hook is drawn into the engaged position by a permanent magnet in the flap. The flap is released by a push button unit.

The present invention relates to an on-vehicle electronic device in accordance with the appended claims.

The present invention addresses the above-described problems in the related-art. An object of the present invention is to provide an on-vehicle electronic device, in which a detachable panel can be reliably locked in an attached state and the detachable panel is easily detached and set in a temporary supported state with components, the number of which is reduced as much as possible.
Another object of the present invention is to provide the on-vehicle electronic device, in which the detachable panel in the attached state is easily prevented from entering a detached state due to an unintentional operation.
The invention is related to an on-vehicle electronic device according to claim 1. Embodiments are described in the dependent claims.

An on-vehicle electronic device according to an aspect of the present invention includes a housing, a panel support unit disposed on a front side of the housing, and a detachable panel having a front portion and a rear portion. The detachable panel, which is detachably attached to the panel support unit, includes at least one of a control and a display device disposed in the front portion. In the on-vehicle electronic device, the detachable panel includes a first hook portion and a second hook portion. The first hook portion and the second hook portion are provided in the rear portion of the detachable panel such that the first hook portion and the second hook portion are spaced apart from each other. In the on-vehicle electronic device, the panel support unit includes a hook support portion to which the first hook portion is hooked, a holding member that is moved between a projected position and a retracted position, a spring member that urges the holding member toward the projected position, and an operation member operated from outside. In the on-vehicle electronic device, a holding recess portion into which the second hook portion is inserted and a temporary support portion that temporarily supports the second hook portion are formed in the holding member. In the on-vehicle electronic device, when the detachable panel is pressed into the panel support unit while being supported at a hook portion where the first hook portion is hooked to the hook support portion, the second hook portion is inserted into the holding recess portion, the holding member is moved to the retracted position, and the holding member is retained by the operation member, thereby the detachable panel becomes stable in an attached posture. In the on-vehicle electronic device, when the operation member is operated and retention of the holding member is released, the holding member is moved to the projected position and the second hook portion is temporarily supported by the temporary support portion, and the detachable panel is rotated toward a front side about the hook portion where the first hook portion is hooked to the hook support portion and stopped in a temporarily supported posture.

In the on-vehicle electronic device according to the present invention, the detachable panel is held in the attached posture by the holding member. When retention of the holding member by the operation member is released, the detachable panel is moved to a temporarily supported position by a projecting operation of the holding member. Since the holding member has both the function of holding the detachable panel and the function of moving the detachable panel to the temporarily supported position, the number of components can be reduced. Furthermore, the holding member is retained at the retracted position by the operation member. Thus, pressure in a projecting direction does not continue to be applied to the detachable panel in a held posture, and accordingly, application of an excessively large pressure to an internal mechanism of the detachable panel or the like is avoided.

Since the holding member having been moved to the retracted position is directly retained by the operation member, the holding member can be reliably operated to move to the retracted position and the projected position by operating the operation member.

Preferably, the on-vehicle electronic device further includes a posture switching mechanism that causes a posture of the panel support unit to change between an initial posture in which the panel support unit is disposed on the front side of the housing and a projected posture in which one of upper and lower end portions of the panel support unit is moved further to the front side than the other end portion. Preferably, when the panel support unit is in the initial posture, the operation member is moved to a position in the housing at which the operation member is unable to be operated, and when the panel support unit is in the projected posture, the operation member is present at a position at which the operation member is able to be operated.

According to the present invention, the operation member is provided in the panel support unit and, when the panel support unit is in the initial posture, the operation portion is hidden in the housing and cannot be operated from outside. Thus, unless the panel support unit is in the projected posture, the detachable panel can be prevented from being detached from the panel support unit due to an unintentional operation.

According to the present invention, the panel support unit may include a single member or a plurality of members.

Preferably, the holding member is rotatably supported by the panel support unit and urged to rotate toward the projected position by the spring member, and the temporary support portion projects at a portion of the holding member to be pushed by the second hook portion when the detachable panel is pushed to assume the attached posture.

Preferably, the operation member is urged by an operation spring member in a first direction, the holding member moving toward the retracted position and the operation member having been moved in the first direction are engaged with each other as a recess and a projection so as to retain the holding member at the retracted position, and, when the operation member is pressed in a second direction, the recess and the projection is disengaged from each other and retention of the holding member is released.

According to the present invention, the posture of the detachable panel can be reliably changed between the attached posture, in which the detachable panel is attached to the panel support unit, and the temporarily supported posture, in which the detachable panel projects to the front side of the panel support unit, mainly with the holding member and other components, the number of which is reduced as much as possible. Furthermore, when the holding member is moved to the retracted position, the holding member is retained by the operation member. Thus, operation by the operation member can be timed to a detaching operation of the detachable panel.

Furthermore, it is possible to configure the operation member such that the operation member cannot be operated unless the panel support unit is in the projected posture.

### BRIEF DESCRIPTION OF THE DRAWINGS

Fig. 1 is a perspective view of an on-vehicle electronic device according to an embodiment of the present invention, a panel support unit of which is in an initial posture;
Fig. 2 is a perspective view of the on-vehicle electronic device according to the embodiment of the present invention, a posture of the panel support unit of which has been changed to a projected posture;
Fig. 3 is a perspective view illustrating the panel support unit in the projected posture and a detachable panel detached from the panel support unit;
Fig. 4 is a perspective view of a support bracket that is part of the panel support unit and a rear surface panel that is part of a rear portion in the detachable panel;
Fig. 5 is a perspective view illustrating an arrangement relationship between holding members and an operation member;
Fig. 6 is a sectional view of the panel support unit, to which the detachable panel is attached, in the initial posture;
Fig. 7 is a sectional view of the panel support unit, to which the detachable panel is attached and the posture of the panel support unit of which has been changed to the projected posture;
Figs. 8A and 8B are explanatory views illustrating operation of the holding member and the operation member; and
Fig. 9 is a flowchart of operation of the on-vehicle electronic device.

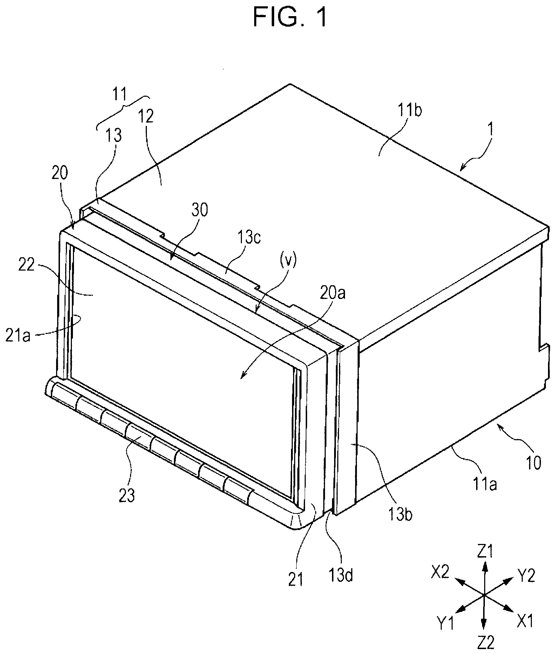

Figs. 1 to 3 illustrate the appearance of an on-vehicle electronic device 1 according to an embodiment of the present invention. In each of the drawings of the on-vehicle electronic device 1, the Y1 and Y2 directions are respectively forward and rearward directions, the X1 and X2 directions are respectively rightward and leftward directions, and the Z1 and Z2 directions are respectively upward and downward directions.

The on-vehicle electronic device 1 includes a device main body 10 and a detachable panel 20. The detachable panel 20 is detachably provided on the front side of the device main body 10.

The device main body 10 includes a housing 11. The housing 11 includes a metal chassis 12 and a cosmetic frame 13. The cosmetic frame 13, which is formed of a synthetic resin, is secured to a front portion of the metal chassis 12.

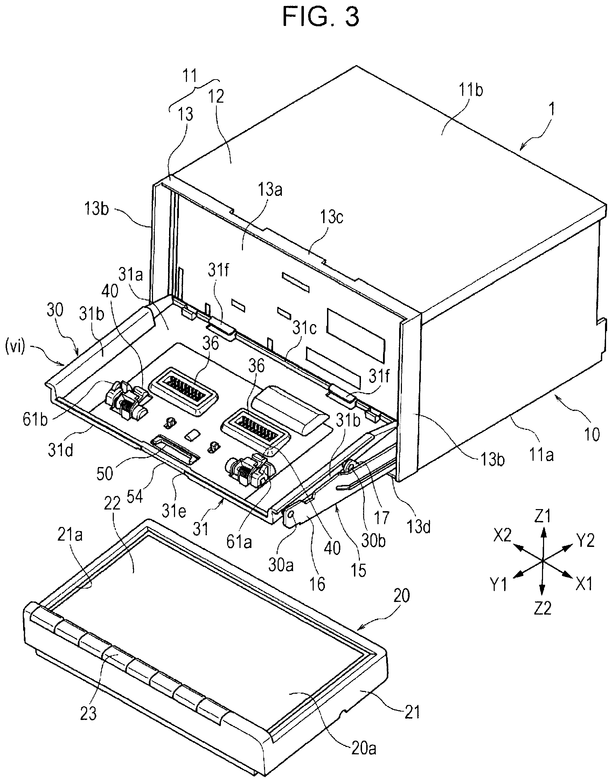

As illustrated in Fig. 3, the cosmetic frame 13 includes a closing portion 13a, a pair of side wall portions 13b, an upper wall portion 13c, and a lower wall portion 13d. The closing portion 13a covers a front opening portion of the metal chassis 12. The side wall portions 13b, which are integrated with the closing portion 13a, project forward from left and right side portions of the closing portion 13a. The upper wall portion 13c, which is integrated with the closing portion 13a, projects forward from an upper portion of the closing portion 13a. The lower wall portions 13d, which is integrated with the closing portion 13a, projects forward from a lower portion of the closing portion 13a.

As illustrated in Fig. 3, in the device main body 10, a panel support unit 30 is provided on the front side of the cosmetic frame 13. The detachable panel 20 is detachably held by the panel support unit 30.

The housing 11 is provided with posture switching mechanisms 15, with which the posture of the panel support unit 30 is switched. The posture switching mechanisms 15 each include a first switching arm 16 and a second switching arm 17. One of the posture switching mechanisms 15 is disposed on the right side (X1 direction side) and the other posture switching mechanism 15 is disposed on the left side (X2 direction side).

A first connecting shaft 30a and a second connecting shaft 30b are integrally formed with the panel support unit 30 on each of the left and right sides of the panel support unit 30. The tips of the first switching arms 16 on the left and right sides are rotatably connected to the respective first connecting shafts 30a. The tips of the second switching arms 17 on the left and right sides are rotatably connected to the respective second connecting shaft 30b.

In each of the posture switching mechanisms 15, the first switching arm 16 is moved forward and backward and the second switching arm 17 is moved forward and backward and rotated by motive power of a motor provided in the housing 11.

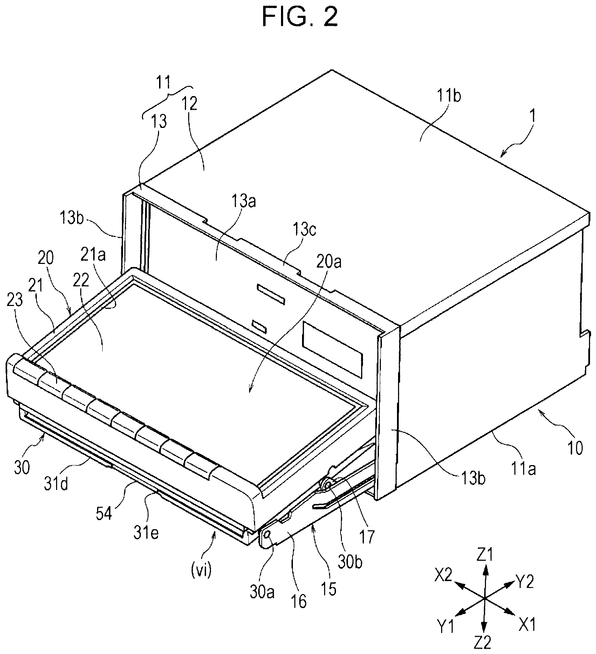

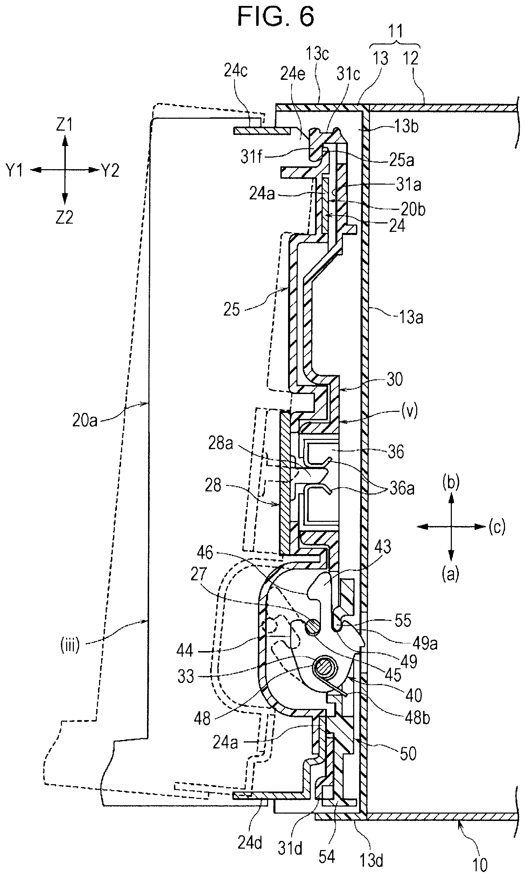

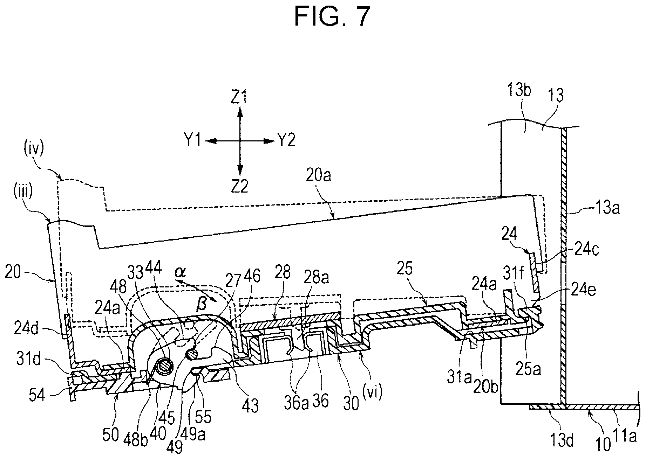

In a state illustrated in Fig. 1, the first switching arms 16 have been retracted in the Y2 direction and the second switching arms 17 have been retracted in the Y2 direction and rotated clockwise when seen from the X1 side. In this state, as illustrated in Fig. 6, the panel support unit 30 is in an initial posture (v), in which the panel support unit 30 is substantially in close contact with a front portion of the housing 11 and perpendicular to a bottom plate 11a and a top plate 11b. In a state illustrated in Figs. 2 and 3, the first switching arms 16 have been advanced in the Y1 direction and the second switching arms 17 have been advanced in the Y1 direction and rotated counterclockwise when seen from the X1 side. In this state, as illustrated in Fig. 7, the panel support unit 30 is in a projected posture (vi), in which a lower end portion has been moved further to the front side than an upper portion in the panel support unit 30.

Although the panel support unit 30 illustrated in Figs. 2, 3, and 7 in the projected posture (vi) is in a substantially horizontal posture, in each of the posture switching mechanisms 15, the angle of the panel support unit 30 in the projected posture (vi) can be freely changed by controlling the amounts by which the first switching arm 16 and the second switching arm 17 are moved.

In the present invention, the panel support unit 30 that is in the projected posture (vi) may be in an inclined posture in which the upper end portion is moved further to the front side than the lower end portion in the panel support unit 30. This posture is used in the cases where, for example, the on-vehicle electronic device 1 is installed in the ceiling of a vehicle.

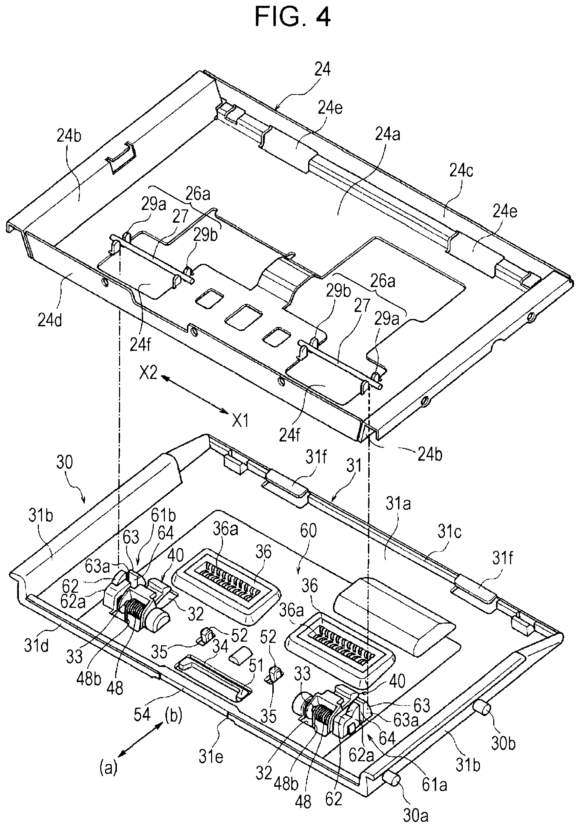

The panel support unit 30 illustrated in Figs. 3 and 4 is assembled from a plurality of members.

The panel support unit 30 includes a support bracket 31 formed of a synthetic resin. The support bracket 31 includes an attachment panel portion 31a, side wall portions 31b, an upper wall portion 31c, and a lower wall portion 31d. The side wall portions 31b, which are integrally formed with the attachment panel portion 31a, project forward from both side portions of the attachment panel portion 31a. The upper wall portion 31c, which is integrally formed with the attachment panel portion 31a, projects forward from an upper end portion of the attachment panel portion 31a. The aforementioned first connecting shaft 30a and the second connecting shaft 30b, which are integrally formed with each of the side wall portions 31b, project from each of the side wall portions 31b.

The attachment panel portion 31a of the support bracket 31 has two opening portions 32 formed therein at left and right positions. A holding member 40 is provided at each of the opening portions 32.

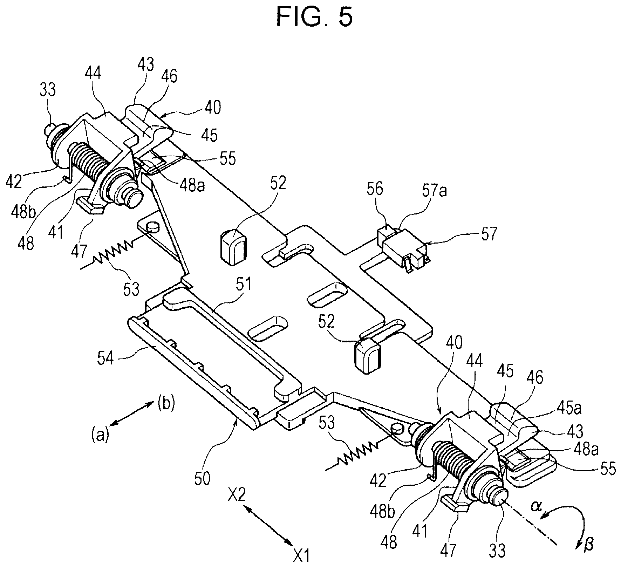

Fig. 5 is an enlarged view of the holding members 40. The holding members 40 are each integrally formed of a synthetic resin. Each of the holding members 40 has a pair of bearing portions 41 and 42 that oppose each other in the left-right direction. In the support bracket 31, support shafts 33, which extend in the left-right direction and cross the opening portions 32, are secured at the opening portions 32. The bearing portions 41 and 42 are supported by the support shafts 33 such that the bearing portions 41 and 42 are rotatable in an α-β direction.

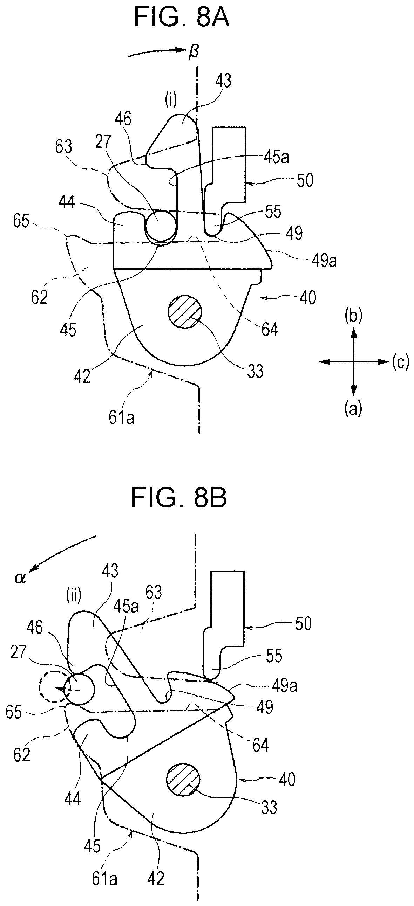

As illustrated in Figs. 5, 6, 8A, and 8B, each of the holding members 40 has holding projections 43 and 44, which are integrally formed with the holding member 40 and oppose each other in the rotational direction. A holding recess portion 45 is formed between the holding projections 43 and 44 in each of the holding member 40. As illustrated in Figs. 8A and 8B, a temporary support portion 46 is integrally formed with the holding projection 43 so as to project in the α direction on one inner edge 45a of the holding recess portion 45, that is, the inner edge of the holding projection 43 facing the α direction.

As illustrated in Fig. 5, a stopper portion 47 is integrally formed with the bearing portion 41, which is one of the bearing portions of each of the holding members 40. By regulating the movement of the stopper portions 47 with a rear portion of the support bracket 31, the holding members 40 are rotatable within a range between a retracted position (i), which is illustrated by a solid line in Figs. 6 and 7 and illustrated in Fig. 8A, and a projected position (ii), which is illustrated by a broken line in Figs. 6 and 7 and illustrated in Fig. 8B.

As illustrated in Fig. 5, a torsion spring 48, which serves as a spring member, is mounted on an outer circumference of the support shaft 33 between the bearing portions 41 and 42 of each of the holding members 40. An arm portion 48a of the torsion spring 48 that extends from one end of a coil of the torsion spring 48 is hooked at each of the holding members 40. The other arm portion 48b of the torsion spring 48 that extends from the other end of the coil of the torsion spring 48 is, as illustrated in Fig. 4, hooked at a front edge of the opening portion 32 of the support bracket 31. As a result, each of the holding members 40 is urged counterclockwise (α direction), that is, urged toward the projected position (ii).

As illustrated in Fig. 4, the attachment panel portion 31a of the support bracket 31 has a first guide opening portion 34 and a pair of second guide opening portions 35. As illustrated in Figs. 4, 6, and 7, an operation member 50 is supported in the rear portion of the support bracket 31. The operation member 50 is integrally formed of a synthetic resin.

A first projecting portion 51 and a pair of second projecting portions 52 are integrally formed with the operation member 50 on a surface of the operation member 50. As illustrated in Fig. 4, the first projecting portion 51 is inserted into the first guide opening portion 34 from the rear side and the pair of second projecting portions 52 are inserted into the second guide opening portions 35 from the rear side. The operation member 50 supported in the rear portion of the support bracket 31 is reciprocatable in a first direction (a) and a second direction (b) within a range in which the first projecting portion 51 is movable in the first guide opening portion 34 and the second projecting portions 52 are movable in the respective second guide opening portions 35.

As illustrated in Fig. 5, a pair of extension coil springs 53, which serve as operation spring members, are mounted between the operation member 50 and a rear surface of the support bracket 31. The operation member 50 is constantly urged in the first direction (a) by the extension coil springs 53.

As illustrated in Fig. 5, a pressure operation portion 54 is integrally formed with the operation member 50 at an end portion of the operation member 50 in the first direction (a). As illustrated in Fig. 4, an operation opening portion 31e is formed at a central portion of the lower wall portion 31d of the support bracket 31, the central portion located at the central portion in the left-right direction, such that the operation opening portion 31e is recessed from the rear portion side. The pressure operation portion 54 of the operation member 50 is exposed in the operation opening portion 31e.

As illustrated in Fig. 6, when the panel support unit 30 is set in the initial posture (v), the pressure operation portion 54 is inside the lower wall portion 13d of the cosmetic frame 13 of the housing 11 by operation of the posture switch mechanisms 15. Thus, the pressure operation portion 54 cannot be pressed from outside. In contrast, as illustrated in Figs. 2 and 7, when the panel support unit 30 is set in the projected posture (vi), the lower wall portion 31d of the support bracket 31 of the panel support unit 30 projects forward. Thus, the pressure operation portion 54 can be pressed from outside.

As illustrated in Fig. 5, regulating projection portions 55 that face the first direction (a) are integrally formed with the operation member 50 on left and right side portions of the operation member 50. As illustrated in Figs. 6, 7, 8A, and 8B, each of the holding members 40 has a regulating recess portion 49 on the β side relative to the holding recess portion 45. The holding members 40 each also have the regulating guide portion 49a on the β side relative to the regulating recess portion 49. The regulating guide portions 49a each have a slightly curved surface. As illustrated in Fig. 8A, when the holding members 40 are rotated in the β direction and approach the retracted position (i), the regulating projection portions 55 slide against the regulating guide portions 49a and are guided into the regulating recess portions 49, thereby causing the regulating projection portions 55 and the respective regulating recess portions 49 to be engaged with one another as projections and recesses. Thus, the holding members 40 are retained at the retracted position (i).

As illustrated in Fig. 5, a switch pressure portion 56 is integrally formed with the operation member 50 such that the switch pressure portion 56 projects in the second direction (b) in a central portion in the left right direction. A detection switch 57 is secured on the rear portion of the support bracket 31 of the panel support unit 30. When the operation member 50 is pressed and moved in the second direction (b), the switch pressure portion 56 is caused to press the actuator 57a of the detection switch 57, thereby switching the state of the detection switch 57 from a non-detecting state to a detecting state.

As illustrated in Fig. 4, in the panel support unit 30, an auxiliary plate 60 formed of a synthetic resin is superposed with the attachment panel portion 31a of the support bracket 31 inside the attachment panel portion 31a. The auxiliary plate 60 has positioning structure portions 61a and 61b, which are integrally formed with the auxiliary plate 60 and spaced apart from each other in the left-right direction. The positioning structure portion 61a on the X1 side and the positioning structure portion 61b on the X2 side are plane-symmetric about the center thereof perpendicular to the left-right direction.

As illustrated in Figs. 4, 8A, and 8B, in each of the positioning structure portions 61a and 61b, a first positioning regulating portion 62 that stands on the attachment panel portion 31a on the first direction (a) side and a second positioning regulating portion 63 that stands on the attachment panel portion 31a on the second direction (b) side are provided. In each of the positioning structure portions 61a and 61b, the first positioning regulating portion 62 and the second positioning regulating portions 63 oppose each other in the (a)-(b) direction, and a positioning space portion 64 is defined at a space where the first positioning regulating portion 62 and the second positioning regulating portion 63 oppose each other.

As illustrated in Figs. 8A and 8B, the first positioning regulating portion 62 and the second positioning regulating portion 63 extend in a perpendicular direction (c) perpendicular to the first direction (a) and the second direction (b), that is, in a direction perpendicular to the attachment panel portion 31a. The positioning space portions 64 also extend in the perpendicular direction (c).

As illustrated in Figs. 8A and 8B, a temporary positioning portion 65 is integrally formed with each of the first positioning regulating portions 62 at the tip of the first positioning regulating portion 62. The temporary positioning portions 65 slightly project in the second direction (b), that is, toward the second positioning regulating portions 63.

As illustrated in Fig. 4, the following positioning surfaces are defined in the positioning structure portion 61a on the X1 side: a side surface 62a of the first positioning regulating portion 62 that faces the X1 direction and a side surface 63a of the second positioning regulating portion 63 that faces the X1 direction. The following positioning surfaces are defined in the positioning structure portion 61b on the X2 side: a side surface 62a of the first positioning regulating portion 62 that faces the X2 direction and a side surface 63a of the second positioning regulating portion 63 that faces the X2 direction.

Referring to Fig. 3, when the panel support unit 30 is in the projected posture (vi), the detachable panel 20 is detached from the panel support unit 30.

As illustrated in Fig. 3, the detachable panel 20 includes a panel case 21 formed of a synthetic resin. In a front portion 20a of the detachable panel 20, a display window 21a is open in the panel case 21. A display device 22 that uses a liquid crystal display, an organic electrochromic display, or the like is disposed in the panel case 21. A display unit (display screen) of the display device 22 is visible in the display window 21a. A transparent touch sensor is provided in the display unit of the display device 22. A plurality of controls (operation buttons) 23 are provided in a lower portion of the panel case 21 in the front portion 20a of the detachable panel 20.

The detachable panel 20 herein includes either or both of the display unit and the controls in the front portion 20a.

Fig. 4 illustrates a rear surface panel 24 that is present in a rear portion 20b of the detachable panel 20. The rear surface panel 24 is formed by pressing a sheet metal material and includes a rear surface portion 24a, side surface portions 24b, an upper surface portion 24c, and a lower surface portion 24d. In the rear surface panel 24, a pair of retaining windows 24e are open in a boundary portion between the rear surface portion 24a and the upper surface portion 24c.

As illustrated in Figs. 6 and 7, in the rear portion 20b of the detachable panel 20, a support member 25 formed of a synthetic resin is superposed with the rear surface panel 24 inside the rear surface panel 24. A pair of first hook portions 25a are integrally formed with the support member 25 at an end of the support member 25 facing the second direction (b) such that the first hook portions 25a are spaced apart from each other in the left-right direction. The first hook portions 25a are located inside the retaining windows 24e formed in the rear surface panel 24.

As illustrated in Fig. 4, hook support portions 31f are integrally formed with the upper wall portion 31c of the support bracket 31 such that the hook support portions 31f are spaced apart from each other in the X1-X2 direction. The hook support portions 31f are integral with the upper wall portion 31c and project in the first direction (a).

As illustrated in Fig. 4, in the rear surface panel 24 provided in the rear portion 20b of the detachable panel 20, a holding opening portions 24f are formed near the lower surface portion 24d such that the holding opening portions 24f are spaced apart from each other in the left-right direction. Shaft support portions 26a and 26b are provided on inner edge portions of the respective holding opening portions 24f. In the shaft support portion 26a on the X1 side, a pair of first support portions 29a are bent on the X1 side and a pair of second support portions 29b are bent on the X2 side. In the shaft support portion 26b on the X2 side, a pair of first support portions 29a are bent on the X2 side and a pair of second support portions 29b are bent on the X1 side.

Metal holding shafts 27 are attached to the shaft support portion 26a located on the X1 side and the shaft support portion 26b located on the X2 side. End portions of the holding shafts 27 cross the holding opening portions 24f in the left-right direction. The end portions of each holding shaft 27 are secured to the corresponding first support portions 29a and the corresponding second support portions 29b. The holding shafts 27 function as second hook portions. Each of the holding shafts 27 as the second hook portions and a corresponding one of the first hook portions 25a are spaced apart from each other in the (a)-(b) direction.

In a state in which the detachable panel 20 is attached to the panel support unit 30, as illustrated in Figs. 6 and 7, the first hook portions 25a are hooked to the hook support portions 31f. Furthermore, as illustrated in Fig. 8A, the holding shafts 27 provided in the rear portion of the detachable panel 20 are inserted into and held by the holding recess portions 45 of the holding members 40. The holding shafts 27 are also inserted into the positioning space portions 64 of the positioning structure portions 61a and 61b.

As illustrated in Figs. 4, 6, and 7, in the panel support unit 30, a pair of main body connectors 36 are secured to the support bracket 31. The main body connectors 36 are socket connectors and each include a plurality of clamping contacts 36a. Each of the clamping contacts 36a of the main body connectors 36 is connected to a circuit board in the metal chassis 12 through a flexible cable.

As illustrated in Figs. 6 and 7, a pair of panel connectors 28 are secured to the support member 25 provided in the detachable panel 20. The panel connectors 28 are plug connectors and each include a plurality of projecting contacts 28a. Each of the projecting contacts 28a is connected to a circuit board provided in the detachable panel 20.

As illustrated by the solid line in Figs. 6 and 7, when the detachable panel 20 is attached to the panel support unit 30 and set in an attached posture (iii), the projecting contacts 28a of each panel connector 28 are inserted into the clamping contacts 36a of a corresponding one of the main body connectors 36, thereby causing the projecting contacts 28a to be connected to the respective clamping contacts 36a.

Next, attaching and detaching operations of the detachable panel 20 in the on-vehicle electronic device 1 are described.

When the detachable panel 20 is detached from the panel support unit 30, as illustrated by the broken line in Figs. 6 and 7 and illustrated in Fig. 8B, the holding members 40 provided in the panel support unit 30 are at the projected position (ii) at which the holding members 40 have been rotated in the α direction. In this state, the regulating projection portions 55 provided in the operation member 50 are disengaged from the regulating recess portions 49 of the holding members 40 and in contact with the regulating guide portions 49a of the holding members 40.

The detachable panel 20 is attached to the panel support unit 30 when, as illustrated in Figs. 1 and 6, the panel support unit 30 is in the initial posture (v), in which the panel support unit 30 is in substantially close contact with the front portion of the housing 11 and perpendicular to the bottom plate 11a and the top plate 11b.

In order to attach the detachable panel 20 to the panel support unit 30, as illustrated by the broken line in Fig. 6, the first hook portions 25a provided in an upper end portion of the rear portion 20b of the detachable panel 20 are hooked to the hook support portions 31f provided in the panel support unit 30. Then, the detachable panel 20 is rotated counterclockwise in Fig. 6 about hooking portions (connection portions) where the first hook portions 25a are hooked to the hook support portions 31f, and the detachable panel 20 is pushed so that the rear portion 20b of the detachable panel 20 is pressed against the attachment panel portion 31a of the support bracket 31 of the panel support unit 30 as illustrated by the solid line in Fig. 6.

While the above-described attaching operation is being performed, the holding shafts 27 as the second hook portions provided in the rear portion 20b of the detachable panel 20 are brought into contact with the holding projections 43 of the holding members 40 at the projected position (ii) illustrated by the broken line in Fig. 6 and illustrated in Fig. 8B. This causes the holding members 40 to resist the elastic forces of the torsion springs 48 and rotate in the β direction. Thus, the holding shafts 27 are guided into the holding recess portion 45 of the holding members 40. As the holding members 40 rotate in the β direction, the holding shafts 27 are guided into the positioning space portions 64 between the first positioning regulating portions 62 and the second positioning regulating portions 63 of the positioning structure portions 61a and 61b provided in the panel support unit 30.

When the rear portion 20b of the detachable panel 20 is pressed against the attachment panel portion 31a of the support bracket 31 as illustrated by the solid line in Fig. 6, the holding members 40 are rotated toward the retracted position (i) as illustrated in Fig. 8A by the holding shafts 27. In this state, the regulating projection portions 55 of the operation member 50 urged in the first direction (a) by the extension coil springs 53 slide against the regulating guide portions 49a of the holding members 40 and enter the regulating recess portions 49. Thus, the holding members 40 are retained at the retracted position (i).

When the holding members 40 are retained at the retracted position (i) as illustrated in Fig. 8A, the holding shafts 27 provided in the rear portion of the detachable panel 20 are held in the holding recess portions 45 of the holding members 40 and also held in the positioning space portions 64 between the first positioning regulating portions 62 and the second positioning regulating portions 63 provided in the panel support unit 30. Thus, the holding shafts 27 are positioned in two directions that (substantially perpendicularly) intersect each other.

As illustrated in Figs. 6 and 8A, in the directions with reference to the panel support unit 30, the holding shafts 27 are held by the positioning space portions 64 in the first direction (a) and the second direction (b), which are directions along the attachment panel portion 31a, substantially without the occurrence of rattles. Furthermore, the holding shafts 27 are held by the holding recess portions 45 of the holding members 40 in the perpendicular direction (c) perpendicular to the (a)-(b) direction substantially without the occurrence of rattles.

The pair of holding shafts 27 provided in the rear portion 20b of the detachable panel 20 are positioned and held in two directions that intersect each other in the panel support unit 30. Thus, in the attached posture (iii) in which the detachable panel 20 is attached to the panel support unit 30, the detachable panel 20 is held relative to the panel support unit 30 in the perpendicular direction (c) without the occurrence of rattles and positioned in the (a)-(b) direction with reference to the holding shafts 27.

In the panel support unit 30, the positioning space portions 64 are formed at precise positions, and in the rear portion 20b of the detachable panel 20, attachment positions of the holding shafts 27 are highly precisely determined. Thus, relative positions of the detachable panel 20 and the panel support unit 30 in the (a)-(b) direction can be highly precisely determined.

If the positioning space portions 64 are not provided, the detachable panel 20 is hooked to the panel support unit 30 at two sets of positions, that is, the first hook portions 25a and the holding shafts 27 serving as the second hook portions. In this case, the detachable panel 20 may tend to rattle in the (a)-(b) direction or the position of the detachable panel 20 may tend to shift in the (a)-(b) direction due to dimensional errors or the like of two sets of hook portions. However, with the present embodiment, such inconveniences are unlikely to occur.

Furthermore, in the attached posture (iii), in which the detachable panel 20 is attached to the panel support unit 30, in the shaft support portion 26a of the rear surface panel 24 illustrated in Fig. 4, the first support portions 29a formed on the X1 side are brought into contact with the side surface 62a of the first positioning regulating portion 62 facing the X1 direction and the side surface 63a of the second positioning regulating portion 63 facing the X1 direction, the first and second positioning regulating portions 62 and 63 being provided in the positioning structure portion 61a of the support bracket 31. Also, in the shaft support portion 26b of the rear surface panel 24, the first support portions 29a formed on the X2 side are brought into contact with the side surface 62a of the first positioning regulating portion 62 facing the X2 direction and the side surface 63a of the second positioning regulating portion 63 facing the X2 direction, the first and second positioning regulating portions 62 and 63 being provided in the positioning structure portion 61b of the support bracket 31.

Thus, in the attached posture (iii), the detachable panel 20 is positioned relative to the panel support unit 30 without the occurrence of rattles in the left-right direction (X1-X2 direction).

That is, in the attached posture (iii), in which the detachable panel 20 is attached to the panel support unit 30, the detachable panel 20 and the panel support unit 30 are integrated with each other, and the detachable panel 20 is positioned in three directions intersecting one another, which are the (a)-(b) direction, (c) direction, and X1-X2 direction, with reference to the positioning structure portions 61a and 61b and the holding shafts 27.

The support member 25 formed of a synthetic resin and illustrated in Fig. 6 may have covering portions that cover the first support portions 29a on the X1 and X2 sides or plate portions in contact with the first support portions 29a on the X1 and X2 sides, the covering portions or plate portions being integrally formed with the support member 25. In this case, the covering portions or the plate portions are brought into contact with the side surfaces 62a and 63a of the first and second positioning regulating portions 62 and 63 so that the detachable panel is positioned in the X1-X2 direction.

When the detachable panel 20 is attached to the panel support unit 30, the projecting contacts 28a of the panel connectors 28 are clamped by the clamping contacts 36a of the main body connectors 36, thereby causing the projecting contacts 28a to be connected to the respective clamping contacts 36a.

As illustrated in Figs. 3 and 7, even when the panel support unit 30 is in the projected posture (vi), in which the lower end portion of the panel support unit 30 has been moved forward, the detachable panel 20 can be attached to the panel support unit 30 similarly to the above description.

As illustrated in Fig. 6, when the panel support unit 30 is in the initial posture (v) while the detachable panel 20 is attached to the panel support unit 30, the pressure operation portion 54 of the operation member 50 supported by the panel support unit 30 is hidden inside the lower wall portions 13d of the cosmetic frame 13, which is part of the housing 11. Thus, when the panel support unit 30 is in the initial posture (v), the pressure operation portion 54 cannot be pressed from outside. This can prevent the pressure operation portion 54 from being accidentally operated, and accordingly, the detachable panel 20 from being unintentionally detached from the panel support unit 30.

Thus, for example, in a state illustrated in Fig. 1, when an image is displayed in the display unit of the display device 22, the detachable panel 20 can be prevented from being accidentally detached from the panel support unit 30. Thus, interruption of various operations due to disconnection of the main body connectors 36 from the panel connectors 28 during communication, a failure caused by sudden interruption of circuitry, or the like can be prevented.

In order to detach the detachable panel 20 from the panel support unit 30, the touch sensor of the screen or the control 23 is operated in accordance with the content displayed in the display unit of the display device 22 so as to set a panel detaching mode by a controller disposed in the housing 11. Alternatively, the panel detaching mode may be automatically set when an accessory switch of the vehicle is turned off.

When the panel detaching mode is set, initially, an image display in the display device 22 of the detachable panel 20 is turned off and transmission of signals between the main body connectors 36 and the panel connectors 28 are stopped. A motor provided in the housing 11 is started, thereby the posture switching mechanisms 15 are operated.

When the posture switching mechanisms 15 are operated, as illustrated in Figs. 3 and 7, the first switching arms 16 are moved forward in the Y1 direction and the second switching arms 17 are moved forward and rotated counterclockwise when seen from the X1 side, thereby setting the panel support unit 30, to which the detachable panel 20 is attached, in the projected posture (vi). In the projected posture (vi), the panel support unit 30 is in a horizontal posture or an inclined posture. In the inclined posture, the lower end portion has been moved further to the front side (Y1 direction) than the upper end portion in the panel support unit 30.

As illustrated in Figs. 3 and 7, when the panel support unit 30 is in the projected posture, the lower wall portion 31d of the support bracket 31 faces the front side (Y1 direction), and the pressure operation portion 54 exposed in the central portion of the lower wall portion 31d is in a posture in which the pressure operation portion 54 can be operated from the front.

When the pressure operation portion 54 is pressed while the panel support unit 30 is in the projected posture (vi), as illustrated in Fig. 8B, the operation member 50 is moved in the second direction (b), the regulating projection portions 55 are disengaged from the regulating recess portions 49 of the holding members 40, and the holding members 40 are rotated in the α direction by the urging forces of the torsion springs 48.

When the holding members 40 are rotated in the α direction, the holding shafts 27 are pushed in a direction separating from the panel support unit 30 by the holding projections 43 of the holding members 40, thereby rotating the detachable panel 20 clockwise when seen from the X1 side about hooking portions where the first hook portions 25a are hooked to the hook support portions 31f. As illustrated by the broken line in Fig. 7, when the detachable panel 20 is rotated into a temporarily supported posture (iv), as illustrated in Fig. 8B, the holding shafts 27 are hooked at the temporary support portions 46 provided at tip portions of the holding projections 43 of the holding members 40. Thus, the detachable panel 20 is lightly locked in the temporarily supported posture (iv) illustrated by the broken line in Fig. 7.

Also, as illustrated in Fig. 8B, when the detachable panel 20 is in the temporarily supported posture (iv), the holding shafts 27 are clamped between the temporary support portions 46 of the holding members 40 and the temporary positioning portions 65 formed in the first positioning regulating portions 62 of the positioning structure portions 61a and 61b. Thus, the detachable panel 20 in the temporarily supported posture (iv) is held in a posture illustrated by the broken line in Fig. 7 so that the detachable panel 20 is not easily detached from the panel support unit 30.

When the detachable panel 20 in the temporarily supported posture (iv) is manually held and moved up, the holding members 40 are slightly rotated in the β direction from the projected position (ii) illustrated in Fig. 8B, thereby removing the holding shafts 27 from the temporary support portions 46. Furthermore, the first hook portions 25a are removed from the hook support portions 31f. Thus, the detachable panel 20 can be detached from the panel support unit 30 as illustrated in Fig. 3.

The on-vehicle electronic device 1 has the following functions: the function of holding the detachable panel 20 in the attached posture (iii) by the holding members 40, the function of pressing the detachable panel 20 in a direction away from the panel support unit 30, and the function of temporarily supporting the detachable panel 20 in the temporarily supported posture (iv). Since all these operations can be controlled with a combination of the holding members 40 and the operation member 50, the number of components can be reduced and a region where the panel support unit 30 and the detachable panel 20 oppose each other can be effectively used.

As illustrated in Fig. 8A, the holding members 40 are retained at the retracted position (i) by the operation member 50. Since the holding members 40 are directly controlled by the operation member 50, the holding members 40 can be reliably moved from the retracted position (i) toward the projected position (ii) when the operation member 50 is operated.

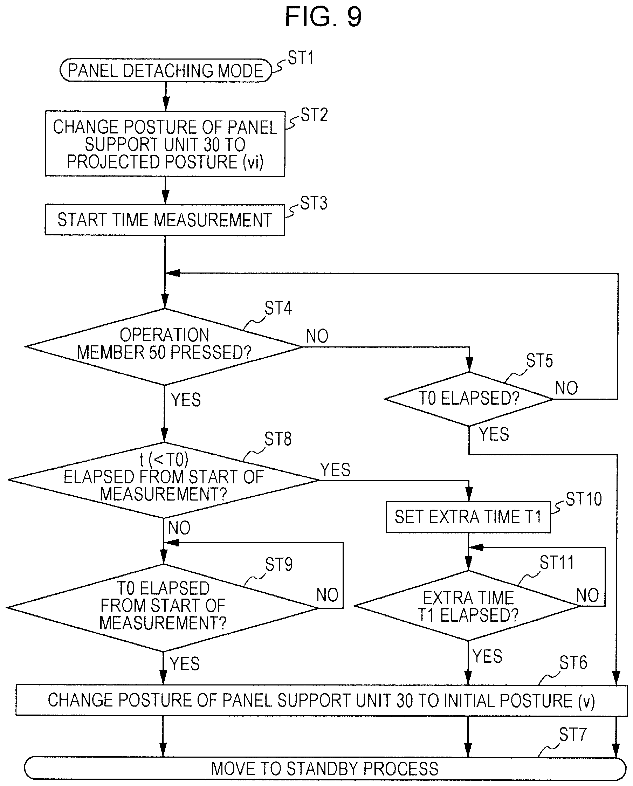

Next, a control operation is described with reference to a flowchart illustrated in Fig. 9. In this control operation, the posture of the panel support unit 30 is changed from the initial posture (v) illustrated in Fig. 1 to the projected posture (vi) illustrated in Fig. 2 and, after the detachable panel 20 has been detached, returned to the initial posture (v).

Each of the steps indicated by "ST" in Fig. 9 is performed by the control operation of the controller provided in the metal chassis 12.

When the panel support unit 30, to which the detachable panel 20 is attached, is in the initial posture (v) as illustrated in Fig. 1, by operating the touch panel of the screen for panel detachment or operating the control 23 while referring to the content displayed in the display unit of the display device 22, the panel detaching mode is set in the controller in ST1. Alternatively, the panel detaching mode may be automatically set when the vehicle is stopped and an accessory switch is turned off.

When the panel detaching mode is set, in ST2, the posture switching mechanisms 15 are started to operate to change the posture of the panel support unit 30, to which the detachable panel 20 is attached, to the projected posture (vi) as illustrated in Figs. 2 and 7. In ST3, measurement of a standby time T0 with a timer is started. The standby time T0 is selected as follows: a time sufficient to, after the posture of the panel support unit 30 has been changed to the projected posture (vi), change the posture of the detachable panel 20 to the temporarily supported posture (iv) by operating the operation member 50 and then perform operation for detaching the detachable panel 20 in the temporarily supported posture (iv) from the panel support unit 30. The standby time T0 is set to, for example, about 20 to 60 seconds.

In ST3, measurement of the standby time T0 is started when the posture of the panel support unit 30 has been changed to the projected posture (vi).

Timing to start the measurement of the standby time T0 may be, for example, any of the following: when the panel detaching mode is set by operating the touch panel or the control 23 in ST1, when the accessory switch is turned off, and when the posture of the panel support unit 30 in the initial posture (v) is started to change to the projected posture (vi) in ST2. That is, timing to start the measurement of the standby time T0 may be any timing from when the touch panel or the control 23 is operated so as to detach the detachable panel 20 or when the accessory switch is turned off to when the posture of the panel support unit 30 has been changed to the projected posture (vi).

In ST4, in the projected posture (vi) illustrated in Figs. 2 and 7, whether or not the pressure operation portion 54 of the operation member 50 facing forward is pressed is monitored. To do this, whether or not the detection switch 57 illustrated in Fig. 5 is switched by the operation member 50 is monitored.

In ST5, whether or not the pressure operation portion 54 of the operation member 50 is operated during the standby time T0 is monitored. If the standby time T0 has elapsed without operation of the operation member 50 in ST4, it is determined that the operation to detach the detachable panel 20 is not performed, and processing moves to ST6. In ST6, the posture switching mechanisms 15 are driven in a reverse direction to return the posture of the panel support unit 30, to which the detachable panel 20 is still attached, to the initial posture (v) illustrated in Fig. 1. Then processing moves to the ST7 and the standby process is performed.

In ST4, if it is determined that the detection switch 57 has been switched by operating the operation member 50, processing moves to ST8. In ST4, when the pressure operation portion 54 is pressed and the operation member 50 is moved in the second direction (b), the holding members 40 are rotated in the α direction to reach the projected position (ii) as illustrated in Fig. 8B, and the posture of the detachable panel 20 becomes the temporarily supported posture (iv) as illustrated in Fig. 7.

In ST8, whether or not a period of time from when the time measurement is started in ST3 to when the detection switch 57 is switched reaches the operation limit time t is determined. The operation limit time t is a period of time shorter than the standby time T0 and determined based on the following criteria.

The operation limit time t is determined based on the estimation that, after the operation limit time t has elapsed, a period of time until the end of the standby time T0 is excessively short and an operation, in which the detachable panel 20 in the temporarily supported posture (iv) is manually held and detached from the panel support unit 30, cannot be safely performed. Conversely, the operation limit time t is determined based on the estimation that, before the operation limit time t elapses, there is a sufficient period of time until the end of the standby time T0 and the operation to detach the detachable panel 20 in the temporarily supported posture (iv) from the panel support unit 30 can be safely performed.

That is, the operation limit time t is set based on the estimation that, within a period of time shorter than a period of time (T0 - t), the operation, in which the detachable panel 20 in the temporarily supported posture (iv) is detached from the panel support unit 30, cannot be safely performed.

For example, the period of time (TO - t) is set to equal to or less than ten or five seconds. Alternatively, the operation limit time t is set so as to satisfy T0/2 ≤ t ≤ T0 or T0(2/3) ≤ t ≤ T0.

In ST8, if the operation limit time t has not elapsed, processing moves to ST9. Processing then moves to ST6 when the standby time T0 is reached. In ST6, the posture switching mechanisms 15 are operated to return the posture of the panel support unit 30 to the initial posture (v) illustrated in Figs. 1 and 6. Under these conditions, there is a sufficient period of time from when the operation member 50 is operated and the posture of the detachable panel 20 is changed to the temporarily supported posture (iv) to when the posture of the panel support unit 30 is returned to the initial posture (v). Thus, the operation, in which the detachable panel 20 in the temporarily supported posture (iv) is manually held and detached, can be safely performed. Accordingly, problems such as the panel support unit 30 moving to assume the initial posture (v) while detaching the detachable panel 20 in the temporarily supported posture (iv) are unlikely to occur.

In ST8, if it is determined that the detection switch 57 is switched after the operation limit time t has elapsed, processing moves to ST10 and an extra time T1 is set. The extra time T1 is set to a period of time equal to or more than 5 or 10 seconds and equal to or less than 30 seconds. In ST11, processing moves to ST6 when the extra time T1 has elapsed. In ST6, the posture switching mechanisms 15 are operated to return the posture of the panel support unit 30 to the initial posture (v) as illustrated in Figs. 1 and 6.

When the operation member 50 is operated and the posture of the detachable panel 20 is changed to the temporarily supported posture (iv) as illustrated by the broken line in Fig. 7 after the operation limit time t has elapsed, the remaining time (t0 - t) is very short. In this case, the movement of the panel support unit 30 may be started to change the posture of the panel support unit 30 to the initial posture (v) when the detachable panel 20 is manually held and started to be detached or while the detachable panel 20 is being detached. In order to address this, the extra time T1 is set in ST10, thereby ensuring that there is a sufficient period of time to detach the detachable panel 20. Thus, the detachable panel 20 can be safely detached while the panel support unit 30 is in the projected posture (vi) as illustrated in Fig. 7.

When the operation member 50 is operated in ST4 and the posture of the detachable panel 20 is changed to the temporarily supported posture (iv), and after that, the standby time T0 is reached in ST9 or the extra time T1 elapses in ST11, processing moves to ST6 regardless of whether or not the detachable panel 20 is detached, and the posture of the panel support unit 30 is returned to the initial posture (v).

In the case where the detachable panel 20 is not detached until the end of ST9 or ST11, the detachable panel 20 in the temporarily supported posture (iv) can be detached after the posture of the panel support unit 30 has been returned to the initial posture (v) as illustrated in Fig. 6. Also, when the panel support unit 30 is in the initial posture (v), the posture of the detachable panel 20 can be returned to the attached posture (iii) by pressing the detachable panel 20 into the panel support unit 30.

Referring to Fig. 9, in ST4, whether or not the posture of the detachable panel 20 has been changed to the temporarily supported posture (iv) is determined by monitoring whether or not the detection switch 57 has been switched. Alternatively, it may be determined that the posture of the detachable panel 20 is changed to the temporarily supported posture (iv) by detecting an electrical signal indicative of disconnection of the main body connectors 36 from the panel connectors 28 in ST4. In this case, the detection switch 57 is not required.

Alternatively in ST4, whether or not the posture of the detachable panel 20 has been changed to the temporarily supported posture (iv) may be determined by monitoring a switching signal of a switch provided to detect the detachable panel 20 approaching the attachment panel portion 31a of the support bracket 31.

## Claims

1. An on-vehicle electronic device (1) comprising:
a housing (11);
a panel support unit (30) disposed on a front side of the housing; and
a detachable panel (20) having a front portion (20a) and a rear portion (20b), the detachable panel including at least one of a control (23) and a display device (22) disposed in the front portion, the detachable panel being detachably attached to the panel support unit,
wherein the detachable panel includes
a first hook portion (25a) and
a holding shaft (27), the first hook portion and the holding shaft being provided in the rear portion of the detachable panel such that the first hook portion and the holding shaft are spaced apart from each other,
wherein the panel support unit includes
a hook support portion (31f) to which the first hook portion is adapted to be hooked,
a holding member (40) that is adapted to be moved between a projected position (ii) and a retracted position (i),
a spring member (48) that is adapted to urge the holding member toward the projected position, and
an operation member (50) operated from outside,
wherein a holding recess portion (45) into which the holding shaft is inserted and a temporary support portion (46) that temporarily supports the holding shaft are formed in the holding member,
wherein, when the detachable panel is pressed into the panel support unit while being supported at a hook portion where the first hook portion is hooked to the hook support portion, the holding shaft is adapted to be inserted into the holding recess portion, the holding member is adapted to be moved to the retracted position, and the holding member is adapted to be retained by the operation member, thereby the detachable panel becomes stable in an attached posture (iii), and
wherein, when the operation member is operated and retention of the holding member is released, the holding member is adapted to be moved to the projected position and the holding shaft is adapted to be temporarily supported by the temporary support portion, and the detachable panel is adapted to be rotated toward the front side about the hook portion where the first hook portion is hooked to the hook support portion and stopped in a temporarily supported posture (iv).

2. The on-vehicle electronic device according to Claim 1, further comprising:
a posture switching mechanism (15) that causes a posture of the panel support unit to change between an initial posture (v) in which the panel support unit is disposed on the front side of the housing and a projected posture (vi) in which one of upper and lower end portions of the panel support unit is moved further to the front side than the other end portion,
wherein, when the panel support unit is in the initial posture, the operation member is adapted to be moved to a position in the housing at which the operation member is unable to be operated, and
wherein, when the panel support unit is in the projected posture, the operation member is adapted to be present at a position at which the operation member is able to be operated.

3. The on-vehicle electronic device according to Claim 1 or 2,
wherein the holding member is rotatably supported by the panel support unit and urged to rotate toward the projected position by the spring member, and
wherein, the temporary support portion projects at a portion of the holding member to be pushed by the holding shaft when the detachable panel is pushed to assume the attached posture.

4. The on-vehicle electronic device according to any one of Claims 1 to 3,
wherein the operation member is adapted to be urged by an operation spring member (53) in a first direction (a),
wherein the holding member moving toward the retracted position and the operation member having been moved in the first direction are adapted to be engaged with each other as a recess and a projection so as to retain the holding member at the retracted position, and
wherein, when the operation member is pressed in a second direction (b), the recess and the projection are adapted to be disengaged from each other and retention of the holding member is adapted to be released.

5. The on-vehicle electronic device according to Claim 4,
wherein a regulating projection portion (55) that faces the first direction is formed in the operation member,
wherein a regulating recess portion (49) is formed in the holding member, and
wherein, when the holding member reaches the retracted position, the regulating recess portion is adapted to oppose the regulating projection portion and the regulating projection portion is adapted to be fitted into the regulating recess portion.

6. The on-vehicle electronic device according to Claim 5,
wherein a pair of the holding members are provided in the panel support unit such that the holding members are spaced apart from each other, the operation member is disposed between the pair of holding members, and a pair of the regulating projection portions each to be fitted into the regulating recess portion of a corresponding one of the holding members are provided in the operation member.

## Patentansprüche

1. An Bord eines Fahrzeugs vorgesehene elektronische Vorrichtung (1), aufweisend:
ein Gehäuse (11);
eine Plattenabstützeinheit (30), die an einer Vorderseite des Gehäuses angeordnet ist; und
eine abnehmbare Platte (20) mit einem vorderen Bereich (20a) und einem hinteren Bereich (20b), wobei die abnehmbare Platte mindestens eines von einer Steuerung (23) und einer Anzeigevorrichtung (22) aufweist, die in dem vorderen Bereich angeordnet sind, wobei die abnehmbare Platte an der Plattenabstützeinheit abnehmbar angebracht ist,
wobei die abnehmbare Platte einen ersten Hakenbereich. (25a) und eine Haltestange (27) aufweist, wobei der erste Hakenbereich und die Haltestange im rückwärtigen Bereich der abnehmbaren Platte derart vorgesehen sind, dass der erste Hakenbereich und die Haltestange voneinander beabstandet sind,
wobei die Plattenabstützeinheit aufweist:
einen Hakenabstützbereich (31f), an dem der erste Hakenbereich eingehakt werden kann,
ein Halteelement (40), das dazu ausgebildet ist, zwischen einer vorstehenden Position (ii) und einer zurückgezogenen Position (i) bewegt zu werden,
ein Federelement (48), das dazu ausgebildet ist, das Halteelement in Richtung auf die vorstehende Position zu drängen, und
ein Betätigungselement (50), das von außen betätigt wird,
wobei ein Halteaussparungsbereich (45), in den die Haltestange eingesetzt ist, sowie ein vorübergehender Abstützbereich (46), der die Haltestange vorübergehend abstützt, in dem Halteelement ausgebildet sind,
wobei dann, wenn die abnehmbare Platte in die Plattenabstützeinheit gedrückt wird, während sie an einem Hakenbereich abgestützt ist, an dem der erste Hakenbereich an dem Hakenabstützbereich eingehakt ist, die Haltestange in den Halteaussparungbereich eingeführt werden kann, das Halteelement in die zurückgezogene Position bewegt werden kann und das Halteelement durch das Betätigungselement festgehalten werden kann, wodurch die abnehmbare Platte in einer befestigten Haltung (iii) stabil wird, und
wobei dann, wenn das Betätigungselement betätigt wird und der Haltezustand des Halteelements gelöst wird, das Halteelement in die vorstehende Position bewegt werden kann und die Haltestange durch den vorübergehenden Abstützbereich vorübergehend abgestützt werden kann und die abnehmbare Platte um den Hakenbereich, an dem der erste Hakenbereich an dem Hakenabstützbereich eingehakt ist, rotationsmäßig zur Vorderseite bewegt werden kann und in einer vorübergehend abgestützten Haltung (iv) gestoppt werden kann.

2. An Bord eines Fahrzeugs vorgesehene elektronische Vorrichtung nach Anspruch 1,
weiterhin aufweisend:
einen Haltungs-Wechselmechanismus (15), der ein Wechseln einer Haltung der Plattenabstützeinheit zwischen einer anfänglichen Haltung (v), in der die Plattenabstützeinheit an der Vorderseite des Gehäuses angeordnet ist, und einer vorstehenden Haltung (vi) veranlasst, in der einer von dem oberen und unteren Endbereich der Plattenabstützeinheit weiter zur Vorderseite bewegt ist als der andere Endbereich,
wobei dann, wenn sich die Plattenabstützeinheit in der anfänglichen Haltung befindet, das Betätigungselement in eine Position in dem Gehäuse bewegt werden kann, an der das Betätigungselement nicht betätigt werden kann, und
wobei dann, wenn sich die Plattenabstützeinheit in der vorstehenden Haltung befindet, das Betätigungselement in einer Position vorliegen kann, in der das Betätigungselement betätigt werden kann.

3. An Bord eines Fahrzeugs vorgesehene elektronische Vorrichtung nach Anspruch 1 oder 2,
wobei das Halteelement von der Plattenabstützeinheit drehbar abgestützt ist und durch das Federelement zur Rotation in Richtung auf die vorstehende Position beaufschlagt ist, und
wobei der vorübergehende Abstützbereich an einem Bereich des Halteelements vorsteht, um von der Haltestange mit Druck beaufschlagt zu werden, wenn die abnehmbare Platte mit Druck beaufschlagt wird, um die befestigte Haltung einzunehmen.

4. An Bord eines Fahrzeugs vorgesehene elektronische Vorrichtung nach einem der Ansprüche 1 bis 3,
wobei das Betätigungselement dazu ausgebildet ist, durch ein Betätigungsfederelement (53) in eine erste Richtung (a) gedrängt zu werden,
wobei sich das in Richtung auf die zurückgezogene Position bewegende Halteelement sowie das in die erste Richtung bewegte Betätigungselement dazu ausgebildet sind, miteinander als Vertiefung und Vorsprung zusammenzuwirken, um das Halteelement in der zurückgezogenen Position zu halten, und
wobei dann, wenn das Betätigungselement in eine zweite Richtung (b) gedrückt wird, die Vertiefung und der Vorsprung voneinander getrennt werden können und der Haltezustand des Halteelements gelöst werden kann.

5. An Bord eines Fahrzeugs vorgesehene elektronische Vorrichtung nach Anspruch 4,
wobei ein Regulierungs-Vorsprungbereich (55), der der ersten Richtung zugewandt ist, an dem Betätigungselement gebildet ist,
wobei ein Regulierungs-Vertiefungsbereich (49) an dem Halteelement gebildet ist, und
wobei dann, wenn das Halteelement die zurückgezogene Position erreicht, der Regulierungs-Vertiefungsbereich dem Regulierungs-Vorsprungbereich gegenüberliegen kann und der Regulierungs-Vorsprungbereich in den Regulierungs-Vertiefungsbereich eingepasst werden kann.

6. An Bord eines Fahrzeugs vorgesehene elektronische Vorrichtung nach Anspruch 5,
wobei ein Paar der Halteelemente in der Plattenabstützeinheit derart vorgesehen ist, dass die Halteelemente voneinander beabstandet sind, das Betätigungselement zwischen dem Paar der Halteelemente angeordnet ist und ein Paar der Regulierungs-Vorsprungbereiche, die jeweils in den Regulierungs-Vertiefungsbereich von einem entsprechenden der Halteelemente einzupassen sind, in dem Betätigungselement vorgesehen ist.

## Revendications

1. Dispositif électronique (1) embarqué dans un véhicule, le dispositif comprenant :
un boîtier (11) ;
une unité de support de panneau (30) disposée sur un côté avant du boîtier ; et
un panneau amovible (20) possédant une portion avant (20a) et une portion arrière (20b), le panneau amovible comprenant au moins un élément choisi parmi une commande (23) et un dispositif d'affichage (22) disposé dans la portion avant, le panneau amovible étant fixé de manière amovible à l'unité de support de panneau ;
dans lequel le panneau amovible comprend :
une première portion (25a) en forme de crochet ; et
une tige de maintien (27), la portion première portion en forme de crochet et la tige de maintien étant prévues dans la portion arrière du panneau amovible d'une manière telle que la première portion en forme de crochet et la tige de maintien sont disposées à l'écart l'une de l'autre ;
dans lequel l'unité de support de panneau comprend :
une portion de support de crochet (31f), la première portion en forme de crochet étant conçue pour venir s'y accrocher ;
un élément de maintien (40) qui est conçu pour prendre une position choisie entre une position saillante (ii) et une position rétractée (i) ;
un élément (48) faisant office de ressort qui est conçu pour presser l'élément de maintien en direction de la position saillante ; et
un élément d'activation (50) actionné depuis l'extérieur ;
dans lequel une portion de maintien sous la forme d'un évidement (45) dans laquelle vient s'insérer la tige de maintien et une portion de support temporaire (46) qui supporte de manière temporaire la tige de maintien sont réalisées dans l'élément de maintien ;
dans lequel, lorsque le panneau amovible est pressé dans l'unité de support de panneau, tout en étant supporté à une portion en forme de crochet dans laquelle la première portion en forme de crochet est accrochée à la portion de support de crochet, l'élément de maintien est conçu pour venir s'insérer dans la portion de maintien sous la forme d'un évidement, l'élément de maintien est conçu pour prendre la position rétractée, et l'élément de maintien est conçu pour être retenu par l'élément d'activation, tant et si bien que le panneau amovible devient stable dans une position (iii) dans laquelle il est fixé ; et
dans lequel, lorsque l'élément d'activation est actionné et lorsque la rétention de l'élément de maintien est libérée, l'élément de maintien est conçu pour prendre la position saillante et la tige de maintien est conçue pour être supportée de manière temporaire par la portion de support temporaire, et le panneau amovible est conçu pour effectuer une rotation en direction du côté avant autour de la portion en forme de crochet, d'une manière telle que la première portion en forme de crochet est accrochée à la portion de support de crochet et arrêtée dans une position (iv) dans laquelle elle est supportée de manière temporaire.

2. Dispositif électronique embarqué selon la revendication 1, comprenant en outre ;
un mécanisme de commutation de position (15) qui fait en sorte qu'une position de l'unité de support de panneau change pour passer d'une position initiale (v) dans laquelle l'unité de support de panneau est disposée sur le côté avant du boîtier et une position saillante (vi) dans laquelle une portion terminale choisie parmi la portion terminale supérieure et la portion terminale inférieure de l'unité de support de panneau se déplace en direction du côté avant plus loin que l'autre portion terminale ;
dans lequel, lorsque l'unité de support de panneau se trouve dans la position initiale, l'élément d'activation est conçu pour prendre une position dans le boîtier dans laquelle l'élément d'activation n'a pas la possibilité d'être actionné ; et
dans lequel, lorsque l'unité de support de panneau se trouve dans la position saillante, l'élément d'activation est conçu pour être présent dans une position dans laquelle l'élément d'activation a la possibilité d'être actionné.

3. Dispositif électronique embarqué selon la revendication 1 ou 2,
dans lequel l'élément de maintien est supporté en rotation par l'unité de support de panneau et est pressé par l'élément faisant office de ressort pour être mis en rotation en direction de la position saillante ; et
dans lequel la portion de support temporaire fait saillie à une portion de l'élément de maintien qui doit être poussée par la tige de maintien lorsque le panneau amovible est poussé pour prendre la position dans laquelle il est fixé.

4. Dispositif électronique embarqué selon l'une quelconque des revendications 1 à 3,
dans lequel l'élément d'activation est conçu pour être pressé par un élément d'activation (53) sous la forme d'un ressort, dans une première direction (a) ;
dans lequel l'élément de maintien en train de prendre la position rétractée et l'élément d'activation qui s'est déplacé dans la première direction sont conçus pour entrer en contact l'un avec l'autre sous la forme d'un évidement et d'une saillie de façon à retenir l'élément de maintien dans la position rétractée ; et
dans lequel, lorsque l'élément d'activation est pressé dans une seconde direction (b), l'évidement et la saillie sont conçus pour se désengrener de manière réciproque et la rétention de l'élément de maintien est conçue pour être libérée.

5. Dispositif électronique embarqué selon la revendication 4,
dans lequel une portion de régulation sous la forme d'une saillie (55) qui est opposée à la première direction est formée dans l'élément d'activation ;
dans lequel une portion de régulation sous la forme d'un évidement (49) est formée dans l'élément de maintien ; et
dans lequel, lorsque l'élément de maintien atteint la position rétractée, la portion de régulation sous la forme d'un évidement est conçue pour être disposée à l'opposé de la portion de régulation sous la forme d'une saillie et la portion de régulation sous la forme d'une saillie est conçue pour venir s'insérer dans la portion de régulation sous la forme d'un évidement.

6. Dispositif électronique embarqué selon la revendication 5,
dans lequel une paire d'éléments de maintien est prévue dans l'unité de support de panneau d'une manière telle que les éléments de maintien sont espacés l'un de l'autre, l'élément d'activation est disposé entre la paire des éléments de maintien, et une paire des portions de régulation sous la forme de saillies, chacune destinée à venir s'insérer dans la portion de régulation sous la forme d'un évidement d'un élément de maintien correspondant parmi lesdits éléments de maintien, est prévue dans l'élément d'activation.
